# EUROPEAN PATENT APPLICATION

(11) **EP 2 620 943 A2**
(43) Date of publication of application: **31.07.2013**
(21) Application number: 12182313.2
(22) Date of filing: 30.08.2012
(51) Int. Cl.: G11B 7/1275, G11B 7/24, G11B 7/24038

(54) **Electronic device, recording medium, and recording and reproducing method**

(30) Priority: 30.01.2012 JP 2012017311
(71) Applicant: Kabushiki Kaisha Toshiba, Tokyo 105-8001 (JP)
(72) Inventor: Watabe, Kazuo, Tokyo, 105-8001 (JP)
(74) Representative: Henkel, Breuer & Partner

(57) **Abstract**

According to one embodiment, an electronic device characterized by including, a turntable (50) configured to rotate a recording medium including a recording layer along a plane on which a surface of the recording layer extends, a servo data providing mechanism (10) configured to provide on a surface of the turntable facing the recording layer of the recording medium and provides servo data used for recording of data on the recoding medium or reproduction of data from the recording medium, and a recording and reproduction module (20) configured to irradiate the recording layer of the recording medium with light having a first wavelength and light having a second wavelength different from the light having the first wavelength from the opposite side of the recording medium with respect to the turntable.

## Description

Embodiments are described herein relates generally to an electronic device which records data, an electronic device which reproduces recorded data, a recording medium, and a recording and reproducing method.

As recording mediums for use in recording and reproduction of contents (which may be referred to as a program or a title in some cases) such as moving pictures or still pictures or data, there are recording mediums based on various standards and specifications.

Of the recording mediums, a recording medium called an optical disk, which is 1.2 mm thick, has little flexibility. If a plurality of optical disks are used to increase storage capacity, the thickness of a package to contain the optical disks will increase.

On the other hand, if the thickness is reduced to about 100 µm to increase the flexibility, additional costs will be incurred in forming a guide groove and the like. Moreover, multi-layering for increasing storage capacity is difficult.

An object of the invention is to provide storage capacity of a recording medium having flexibility is increased and to provide an electronic device capable of recording data in the recording medium and reproducing data from the recording medium and a recording and reproducing method for the same.

In general, according to one embodiment, an electronic device characterized by comprising: a turntable configured to rotate a recording medium including a recording layer along a plane on which a surface of the recording layer extends; a servo data providing mechanism configured to provide on a surface of the turntable facing the recording layer of the recording medium and provides servo data used for recording of data on the recoding medium or reproduction of data from the recording medium; and a recording and reproduction module configured to irradiate the recording layer of the recording medium with light having a first wavelength and light having a second wavelength different from the light having the first wavelength from the opposite side of the recording medium with respect to the turntable.

A general architecture that implements the various features of the embodiments will now be described with reference to the drawings. The drawings and the associated descriptions are provided to illustrate the embodiments and not to limit the scope of the invention.
FIG. 1A is an exemplary diagram showing an example of a data recording and reproducing apparatus (an electronic device) according to an embodiment;
FIG. 1B is an exemplary diagram showing an example of a turntable according to an embodiment;
FIGS. 2A and 2B are exemplary diagrams each showing an example of a turntable and a recording medium (an optical disk) according to an embodiment;
FIGS. 3A and 3B are exemplary diagrams each showing an example of a turntable and a recording medium (an optical disk) according to an embodiment;
FIGS. 4A and 4B are exemplary diagrams each showing an example of a turntable and a recording medium (an optical disk) according to an embodiment;
FIG. 5 is an exemplary diagram showing an example of a data recording and reproducing apparatus (an electronic device) according to an embodiment;
FIG. 6 is an exemplary diagram showing an example of an optical pickup unit of a data recording and reproducing apparatus according to an embodiment;
FIGS. 7A and 7B are exemplary diagrams each showing an example recording and reproduction performed by a data recording and reproducing apparatus according to an embodiment;
FIG. 8A is an exemplary diagram showing an example of a data recording and reproducing apparatus according to an embodiment;
FIG. 8B is an exemplary diagram an example of a turntable according to an embodiment;
FIG. 8C is an exemplary diagram showing an example of a recording medium according to an embodiment;
FIG. 9A is an exemplary diagram showing an example of a turntable according to an embodiment;
FIG. 9B is an exemplary diagram showing an example of a recording medium according to an embodiment;
FIG. 10A is an exemplary diagram an example of a data recording and reproducing apparatus according to an embodiment;
FIG. 10B is an exemplary diagram an example of a turntable according to an embodiment;
FIG. 10C is an exemplary diagram showing an example of a recording medium according to an embodiment;
FIG. 11 is an exemplary diagram showing an example of a recording medium according to an embodiment;
FIG. 12 is an exemplary diagram showing an example of a recording medium including feature information according to an embodiment; and
FIG. 13 is an exemplary diagram showing an example of a data recording medium according to an embodiment.

Embodiments will now be described hereinafter in detail with reference to the accompanying drawings.

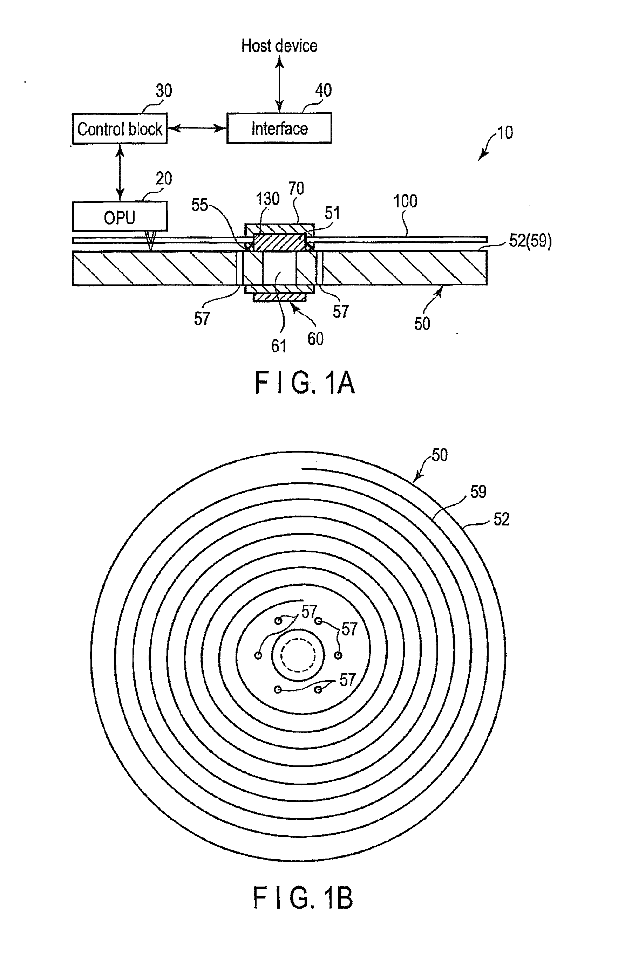

FIG. 1A shows an outline of a configuration of an electronic device (a data recording and reproducing apparatus) to which the embodiment is applied. FIG. 1B shows an exemplary diagram showing an example of a turntable to which the embodiment is applied. It is to be noted that an example of a data recording and reproducing apparatus will be explained as the electronic device, but the embodiment is not restricted thereto. That is, the electronic device may be a broadcast receiving apparatus or a personal computer which has the data recording and reproducing apparatus incorporated integrally or through electrical connection, a recording medium which is mainly used as a memory device, a recording unit which can access the recording medium, and others. Further, elements, structures, or functions described below may be realized by hardware or may be realized by software using a microcomputer (processor, CPU) and others.

A data recording and reproducing apparatus (the electronic device) 10 includes at least an optical pickup head unit (OPU) 20, a control block (a signal processing unit) 30, an interface 40, and a turntable 50.

A flexible disk (a recording medium which will be simply referred to as an optical disk hereinafter) 100 has a thickness of approximately 100 µm (microns/micrometers) and flexibility. An upper surface shape of the optical disk 100 is circular in shape having a diameter of, for example, 120 mm. The optical disk 100 includes a center hole 130 used for mounting to the turntable 50 and a recording region (a recording film) of up to approximately 16 layers. Further, the recording region of the optical disk 100 does not have a guide groove, patterned bumps, and the like.

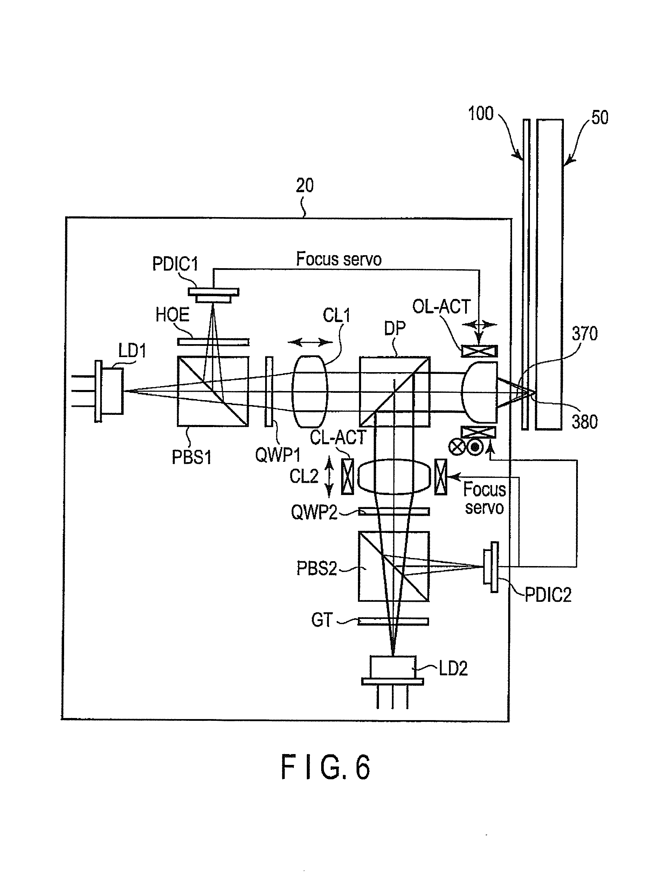

Although described later in detail with reference to FIG. 6, the OPU 20 has two laser diodes (LDs) LD 1 (blue) and LD 2 (red), records data in the recording region of the optical disk 100, and reproduces data already recorded in the recording region.

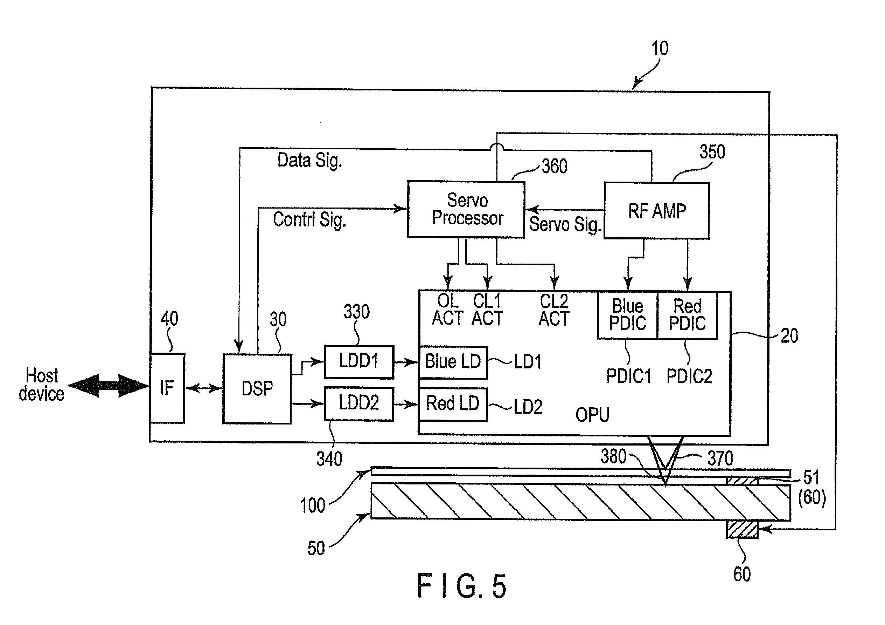

Although described later in detail with reference to FIG. 5, the signal processing unit (the control block) 30 is in control of writing or erasing of data or reproduction of data using the OPU 20 and control over the data recording and reproducing apparatus 10.

The interface 40 controls transmission and reception of signals between the data recording and reproducing apparatus 10 and the other party to be connected (a host device).

The turntable 50 has a central shaft 51, a substrate (a disk support board) 52, a spacer portion 55 having a predetermined thickness (a height), and a predetermined number of through-holes 57. The optical disk 100 is set on the spacer unit 55 of the turntable 50 and pressed against the spacer portion 55 by pressing force (pressure) from a clamper 70. Therefore, the substrate (a disk guide board) 52 and the optical disk 100 are not appressed against each other except a region which is in contact with the spacer portion 55.

The turntable 50 is fixed to a spindle motor 60 and rotates on a rotary shaft 61 of the spindle motor 60. The central shaft 51 of the turntable 50 may be integrated with the rotary shaft 61 of the spindle motor 61, or the rotary shaft 61 of the spindle motor 60 may also function as this central shaft 51.

A guide groove 59 is formed on the surface of the substrate (the disk guide board) 52 outward from the outer side to the outer periphery of the inner peripheral through-holes 57 on, for example, the outer side of the spacer portion 55. The guide groove 59 is manufactured by, for example, die-casting using a mold having a shape of the guide groove 59 microfabricated thereon at the time of manufacture of the substrate 52. Considering mass productivity, casting or injection molding (aluminum die-casting) is preferable for manufacture of the substrate 52 and the guide groove 59, these members may be manufactured one by one based on machining. A material of the substrate 52 is not restricted to aluminum, and it may be plastic or any other metals as long as rigidity can be assured.

The guide groove 59 has a spiral structure having, for example, a groove depth of 60 nm (nanometer) and a pitch (a track pitch) of 0.64 µm, and a ratio of a concave portion and a convex portion in a cross section is substantially 1 to 1. It is to be noted that the groove depth or the track pitch is not restricted the above value, a deep groove having a depth of approximately 100 nm or a shallow groove of depth approximately 20 nm may be used, and a narrow track pitch of approximately 0.32 µm or a wide track pitch of approximately 0.74 µm or approximately 1.2 µm may be used.

Furthermore, the guide groove 59 may have a concentric ring structure. Moreover, in case of the spiral structure, a single spiral structure in which a concave portion and a convex portion are switched every circle may be adopted. It is to be noted that address data is applied (recorded) to the guide groove 59 by, for example, a wobble which is meandering in a direction vertical to an extending direction of the guide groove 59 within a plane of the turntable 50.

The optical disk 100 is placed on the surface of the substrate 52 of the turntable 50 with a gap corresponding to a height (a thickness) of the spacer portion 55. When the turntable 50 (the substrate 52) rotates, there are generated air currents flowing from the through-holes 57 through the gap between the surface of the substrate 52 (the turntable 50) and the optical disk 100 in a direction extending from the inner periphery toward the outer periphery of the optical disk 100. The air currents provide a negative pressure that presses the optical disk 100 against the surface of the turntable 50. The air currents maintain the gap between the optical disk 100 and the surface of the substrate 52 (the turntable 50) at a substantially fixed gap. That is, although the turntable 50 is a rotating substrate, it also functions as a posture control (stabilizing) plate for the optical disk 100. It is to be noted that the number of the through-holes 57 is an arbitrary number such as 4, 6, 8, 3, 5, or 7 as long as the air currents that can provide the negative pressure can be generated between the surface of the turntable 50 and the optical disk 100. Additionally, a cross-sectional shape of the through-hole 57 may be a circular shape, an elliptical shape, a polygonal shape, or a shape obtained by combining these shapes.

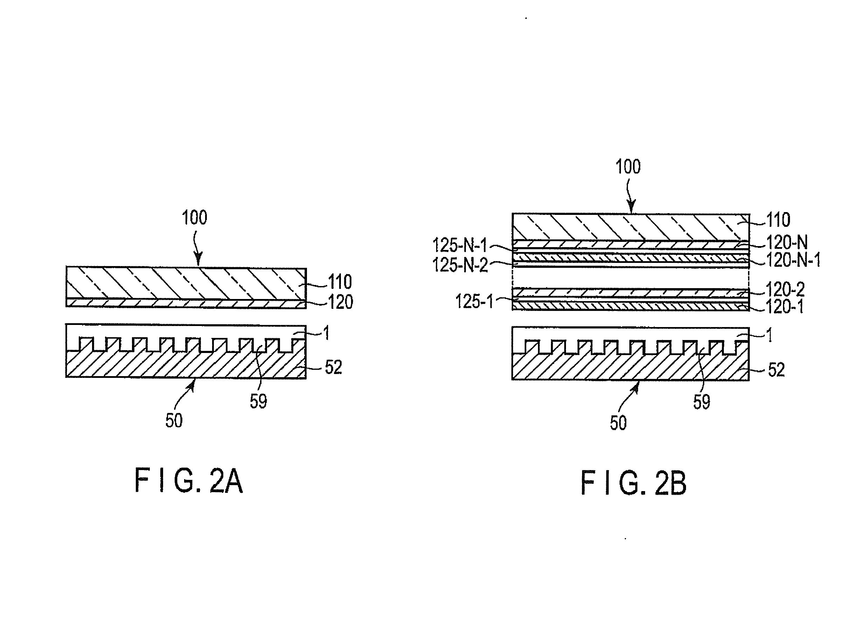

FIG. 2A shows a cross-sectional shape of the optical disk 100 and the turntable 50 according to the embodiment.

The optical disk 100 is constituted of a cover layer 110 and a recording layer 120 which is a single layer, an entire thickness is, for example, 100 µm. A ratio of a thickness of the cover layer 110 and that of the recording layer 120 is not greater than 100 to 1, for example. Therefore, as shown in FIG. 2A, when the recording layer 120 is the single layer, the thickness of the recording layer 120 can be ignored with respect to the thickness of the cover layer 110.

Although a material of the cover layer 110 is not restricted in particular as long as it is a material having transparency, a synthetic resin such as polycarbonate or PMMA or glass can be used.

The recording layer 120 is a layer on which data is recorded, a laser beam emitted from the OPU 20 causes a change, and a mark corresponding to data is recorded. For example, the recording layer 120 is a phase-change recording film formed of a multilayer film containing a phase-change material or a recordable recording layer consisting of an organic dye.

FIG. 2B shows an example that the optical disk 100 has recording layers 120-1, ... , 120-N-1, and 120-N (N being a positive integer) and illustrates a case that the optical disk 100 has four recording layers. A configuration of the turntable 50 is the same as that depicted in FIG. 2A. It is to be noted that the number of the recording layers is not restricted to 4, and an arbitrary number of layers can be provided.

In the optical disk 100, the recording layers 120-1, ... , 120-N-1, and 120-N and intermediate layers 125-1, ... , 125-N-2, and 125-N-1 are alternately arranged on the cover layer 110. Therefore, in case of the four recording layers, the three intermediate layers 125-1, 125-2 (not shown) and 125-3 (not shown) are provided. Although a thickness of each of the intermediate layers 125-1, 125-2 and 125-3 and a thickness of the cover layer 110 are not restricted in particular, it is preferable for the entire thickness to be substantially the same as compared with the example where the single recording layer 120 shown in FIG. 2A is provided. Therefore, for example, when an average thickness of the intermediate layers 125-1, 125-2 and 125-3 is 15 µm, a thickness of the cover layer 110 is approximately 55 µm.

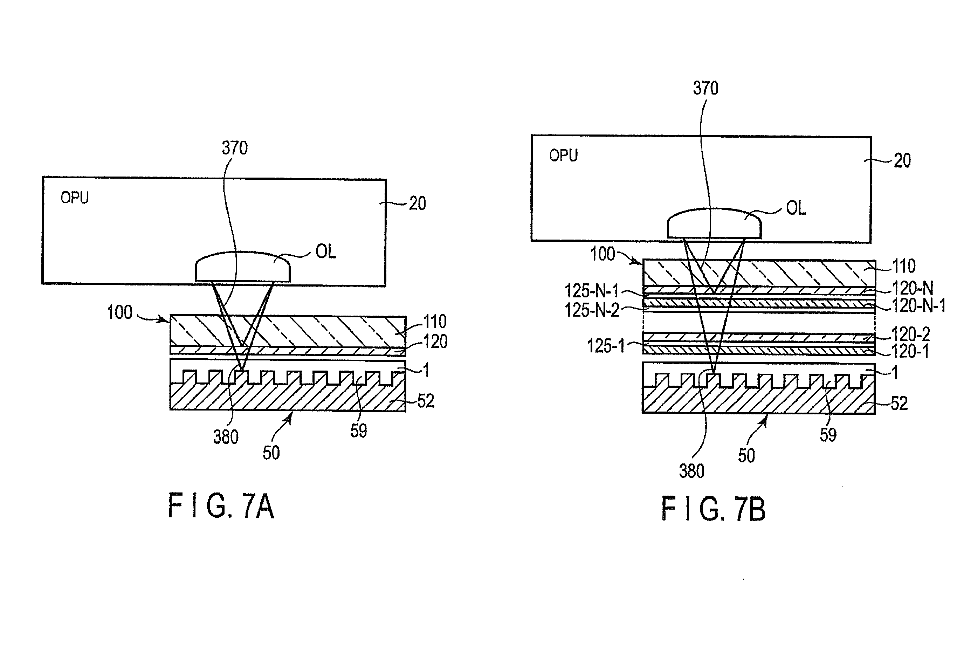

As shown in FIGS. 2A and 2B, it is preferable to provide a protective layer 1 that protects the guide groove on the guide groove 59 of the substrate 52 of the turntable 50. The protective layer 1 is formed of, for example, a transparent material, and a thickness of this layer is, for example, 50 µm. Further, in FIGS. 2A and 2B, a thickness of the protective layer 1 and a depth of the patterned bumps of the guide groove 59 are substantially equal to each other for illustrative purpose, but the depth of the guide groove 59 is actually much less than the thickness of the protective layer, and it is, for example, not greater than 1%. It is to be noted that, in the example shown in FIGS. 2A and 2B, since the protective layer 1 is placed on the turntable 50 (the substrate 52) side, the thickness of the protective layer 1 does not change in accordance with each data recording and reproducing apparatus, and hence adjustment of aberration correction at the time of recording and reproduction performed by the OPU 20 can be readily optimized. Furthermore, since the thickness of the protective layer 1 is substantially fixed and evenness of the thickness can be substantially uniformed, focus adjustment for the guide groove 59 on the OPU 20 side can be eliminated as will be described later with reference to FIGS. 7A and 7B.

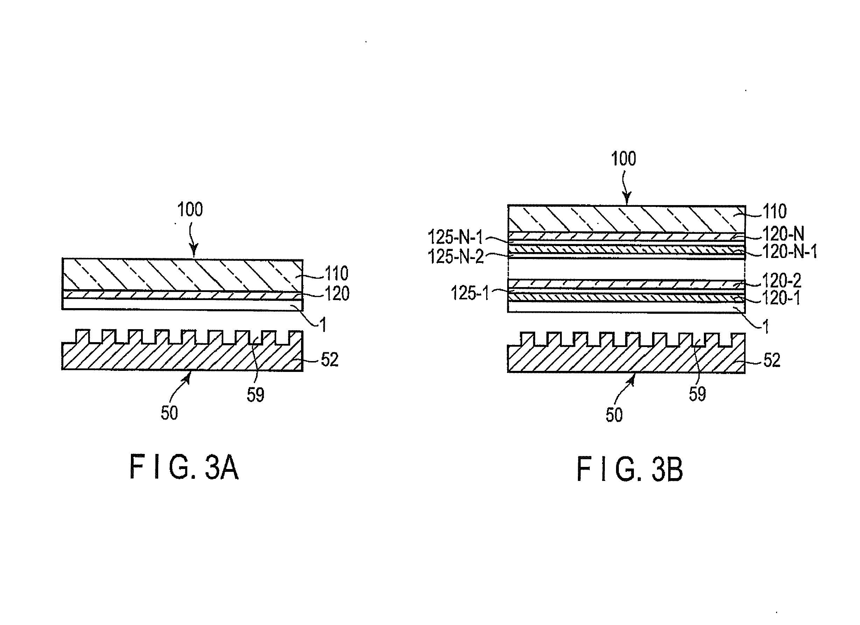

As shown in FIGS. 3A and 3B, the protective layer 1 may be provided on the surface of the optical disk 100 on the opposite side of the cover layer 110, i.e., the outermost surface of the recording layers 120 (of the optical disk 100) facing the substrate 52 of the turntable 50.

In the example shown in FIGS. 3A and 3B, since the protective layer 1 is provided on the recording layer side on the optical disk 100 side, the recording layer 120 (the outermost surface of 120-1, ... , 120-N, i.e., 120-1) of the optical disk 100 is not exposed (not exposed to outside air), and hence deterioration of the recording layer can be suppressed.

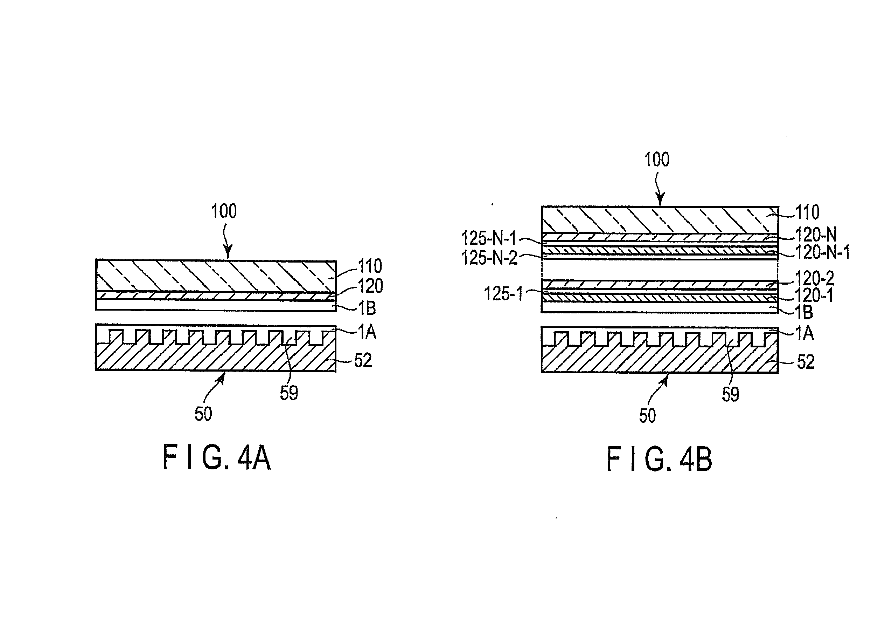

As shown in FIGS. 4A and 4B, the protective layer 1 may be provided on both the surface of the optical disk 100 on the opposite side of the cover layer 110, i.e., the recording layer (the outermost surface of 120-1, ... , 120-N, i.e., 120-1) (of the optical disk 100) facing the substrate 52 of the turntable 50 and the substrate 52 (of the turntable 50).

In this case, the protective layer 1 is divided into a protective layer 1A on the substrate 52 (of the turntable 50) and a protective layer 1B on the recording layer 120 side (120-1) of the optical disk 100, and the respective divided layers are provided on the substrate 52 of the turntable 50 and the recording layer 120 (120-1) of the optical disk 100.

It is to be noted that a sum of thicknesses of the protective layer 1A and the protective layer 1B is the same as that of the protective layer 1. Moreover, although a ratio of the thickness of the protective layer 1A and that of the protective layer 1B is not restricted in particular, it is, for example, substantially 1 to 1.

It is to be noted that, considering the viewpoint of avoiding deterioration of the recording layer while maintaining constancy of the protective layers which is an advantage of each of the configuration shown in FIGS. 2A and 2B and that shown in FIGS. 3A and 3B, adjusting the thickness of the protective layer 1A to be larger than that of the protective layer 1B is desirable. For example, a ratio larger than substantially 10 to 1 is preferable. In this case, since the thickness of the entire protective layer 1 is substantially determined by the thickness of the protective layer 1A, an error of a layer thickness of the protective layer in each disk can be reduced. Additionally, although the protective layer 1B is thinner than the protective layer 1A, the protective layer 1B can prevent the recording layer from being exposed, whereby deterioration of the recording layer 120 (120-1) can be suppressed.

FIG. 5 shows an example of a configuration of the data recording and reproducing apparatus (the electronic device).

The data recording and reproducing apparatus 10 has laser drivers (LDDs) 330 and 340, laser diodes (incorporated in the OPU 20) (which will be referred to as LDs hereinafter) 1 (blue) and 2 (red), an RF signal processing circuit (an RF amplifier IC) 350, a servo controller (a servo processor) 360, and others in addition to the interface 40, the signal processing unit (DSP) 30, and the optical pickup head unit (OPU) 20 described in conjunction with FIG. 1A.

The interface 40 is a connecting unit which transmits or receives commands or data with a non-illustrated external host, and it is based on a standard such as Serial Advanced Technology Attachment (SATA).

The signal processing unit 30 is in control of, for example, transmission/reception of commands and data with the external host through the interface 40, conversion of data, transmission of data pulses and control signals to the laser drivers 330 and 340, transmission of control signals to the servo controller 360, and reception of data signals from the RF amplifier IC 350.

The laser driver 330 and 340 receive data pulses and control signals from the signal processing unit 30, convert them into respective corresponding drive pulses for the LD 1 (blue) and the LD 2 (red) (which are incorporated in the OPU 20), and transmit the drive pulses to the OPU 20, for example.

The OPU 20 irradiates the optical disk 100 and the substrate 52 (the turntable 50) with a blue-violet laser beam 370 from the LD 1 (blue) and a red laser beam 380 from the LD 2 (red) associated with the drive pulses from the laser drivers 330 and 340, receives reflected lights, and transmits a signal associated with a change in intensity of the reflected lights to the RF amplifier IC 350.

The RF amplifier IC 350 amplifies the signal from the OPU 20, generates a servo signal and a data signal, and transmits these signals to the servo controller 360 and the signal processing unit 30.

The servo controller 360 receives the servo signal from the RF amplifier IC 350, converts the servo signal into an actuator drive signal and a spindle motor drive signal, transmits the actuator drive signal to the OPU 20, and transmits the spindle motor drive signal to the spindle motor 60.

The spindle motor 60 receives the spindle motor drive signal from the servo controller 360 and rotates the optical disk 100 placed on the turntable 50 on an axis vertical to the extending direction of a plane including the recording layer (the recording surface). It is to be noted, if the number of revolutions is a constant linear velocity with a fixed travel in the guide groove 59 per unit time, it changes within a predetermined range. It is also possible to use a constant angular velocity (CAV) with a fixed rate of revolution as a matter of course.

FIG. 6 shows a detailed configuration of the optical pickup head unit (OPU).

The OPU (the optical pickup head unit) 20 has at least the laser diode (a blue LD) LD 1 which outputs a blue-violet laser beam having a wavelength of 400 to 410 (a center wavelength is 405) nm (nanometers), a laser diode (a red LD) LD 2 which outputs a red laser beam having a wavelength of 640 to 680 (a center wavelength is 655) nm (nanometers), first and second polarizing beam splitters (PBSs) PBS 1 and PBS 2, first and second quarter-wave plates (QWPs) QWP 1 and QWP 2, first and second collimator lenses (CLs) CL 1 and CL 2, an objective lens (OL), a holographic optical element (HOE), a blue-violet (LD 1) photodetector IC (a blue PDIC) PDIC 1, a red (LD 2) photodetector IC (a red PDIC) PDIC 2, a grating (GT), a dichroic prism (DP), a collimator lens (CL 2) actuator (CL-ACT), and an objective lens actuator (OL-ACT).

The blue-violet laser LD 1 is a semiconductor laser element which outputs a blue-violet laser beam having a center wavelength of 405 nm, and it emits a laser beam for recording data on the recording layer (the recording film) of the optical disk 100 and reproducing data from the recording layer. The blue-violet laser LD 1 is connected to the laser driver (LDD 1) 330 of the data recording and reproducing apparatus 10 as shown in FIG. 5.

The PBS 1 transmits incident light from the blue-violet laser LD 1 therethrough and reflects reflected light, whose polarization plane is rotated 90 degrees from that of the incident light, from the recording layer 120 (of the optical disk 100).

The QWP 1 transmits the incident light from the blue-violet LD 1 laser therethrough and converts linearly-polarized light into circularly-polarized light. Further, it transmits the reflected light from the recording layer 120 (of the optical disk 100) therethrough and converts the circularly-polarized light into the linearly-polarized light. Therefore, the reflected light from the recording layer 120 (of the optical disk 100) turns to the linearly-polarized light having a polarization plane that is 90 degrees different from that of the incident light. For example, when the incident light is P-polarized light, the reflected light is S-polarized light.

The collimator lens CL 1 converts the incident light from the blue-violet laser LD 1 into substantially collimated light.

The objective lens OL condenses the laser beam from the blue-violet laser LD 1 that is the collimated light transmitted through the collimator lens CL 1 onto the recording layer 120 of the optical disk 100.

The dichroic prism DP transmits the incident light from the blue-violet laser LD 1 therethrough and reflects the incident light from the red laser LD 2.

The red laser LD 2 is a semiconductor laser having a wavelength of, for example, 655 nm, and it emits a tracking servo laser beam that controls a position of the objective lens OL in the radial direction of the optical disk 100 parallel to the recording surface in such a manner that the center of a light spot of the laser beam condensed on the recording surface of the optical disk 100 by the objective lens OL coincides with the center of the guide groove 59 (on the substrate 52).

As described with reference to FIG. 5, the red laser LD 2 is connected to the laser driver LDD 2 of the data recording and reproducing apparatus 10.

The grating GT diffracts the red laser beam from the red laser LD 2 to be divided into three light beams. The three divided light beams, which are condensed by the objective lens OL, to trace the guide groove 59 on the recording layer 120 of the optical disk 100.

The PBS 2 transmits the incident light from the red laser LD 2 therethrough and reflects reflected light, which contains an intensity changed component generated by the guide groove 59, from the substrate 52 (of the turntable 50) having a polarization plane rotated 90 degrees from that of the incident light.

The QWP 2 transmits the incident light from the red laser LD 2 therethrough and converts linearly-polarized light into circularly-polarized light. Furthermore, it transmits the reflected light of the red laser LD 2 from the substrate 52 (of the turntable 50) therethrough and converts circularly-polarized light into linearly-polarized light. Therefore, the linearly-polarized light having a polarization plane which is 90 degrees different from that of the incident light can be provided. For example, if the incident light is P-polarized light, the reflected light is S-polarized light.

The collimator lens CL 2 converts light emitted from the red laser LD 2 into substantially collimated light.

The HOE transmits reflected light (a light flux), which is obtained by reflecting the laser beam (the light flux) emitted from the blue-violet laser LD 1 on the recording layer 120 of the optical disk 100, therethrough and diffracts a light (a light flux) component in a predetermined region of the reflected light (the light flux) at a predetermined angle.

The blue-violet photodetector PDIC 1 receives the blue-violet laser beam from the HOE, generates a current associated with an amount of received light, converts the current into a voltage using its (built-in) current-voltage conversion circuit provided therein, and outputs the converted voltage.

The red photodetector PDIC 2 receives the red laser beam reflected by the PBS 2, generates a current associated with an amount of received light, converts the current into a voltage using its (built-in) current-voltage conversion circuit provided therein, and outputs the converted voltage.

The collimator lens actuator CL-ACT generates thrust (drives the collimator lens CL 2) which is used to move a position of the collimator lens CL 2 in an optical axis direction (a focus direction) along the optical axis direction of the CL 2 so that a condensing spot of the red laser beam emerging from the objective lens OL can have a minimum spot diameter on the substrate 52 (the turntable 50).

The objective lens actuator OL-ACT generates thrust (drives the objective lens OL) which is used to move a position of the objective lens OL in the optical axis direction (the focus direction) along the optical axis direction of OL so that each of a condensing spot of the blue-violet laser beam and the condensing spot of the red laser beam emerging from the objective lens OL can have a minimum spot diameter on the recording layer 120 of the optical disk 100 and the substrate 52 of the turntable 50, respectively. As a result, it is possible to realize focus control for controlling the position of the objective lens OL so that each of the condensing spot of the blue-violet laser beam and the condensing spot of the red laser beam emerging from the objective lens OL can have the minimum spot diameter on the recording layer 120 and the substrate 52, respectively. A focus control procedure for the respective condensing spots of the blue-violet laser beam and the red laser beam will be described later in detail.

Moreover, the objective lens actuator OL-ACT controls the position of the objective lens OL (drives the objective lens OL) so that the red laser beam emerging from the objective lens OL can move in a direction (a radial direction) vertical to the guide groove 59 (a recording track) on the substrate 52 of the turntable 50. As a result, it is possible to realize tracking control for controlling the position of the objective lens OL so that the center of the condensing spot of the red laser beam emerging from the objective lens OL can coincide with the center of a change in light intensity caused by the guide groove 59 on the substrate 52.

An example of an operation of the data recording and reproducing apparatus at the time of recording data will now be described with reference to FIG. 5, FIGS. 7A and 7B.

A user data record command and data which is a recording target are transmitted from the non-illustrated host device, for example, a personal computer (PC) or a recorder device, and they are supplied to the signal processing unit 30 through the interface 40.

The signal processing unit 30 starts data recording process in accordance with the received record command.

First, the signal processing unit 30 transmits drive signals to the laser driver (LDD 1) 330 for the (blue-violet laser diode) LD 1 and the laser driver (LDD 2) for the (red laser diode) LD 2, and lights up the blue-violet laser LD 1 and the red laser LD 2 with reproduction power. Then, the signal processing unit 30 transmits a control signal to the servo controller 360.

The servo controller 360 transmits a rotation drive signal to the spindle motor 60 and rotates the turntable 50 (and the optical disk 100 fixed on the spacer portion 55 of the turntable 50 by the clamper 70) at a predetermined number of revolutions.

The signal processing unit 30 transmits a focus search control signal to the servo controller 360.

The servo controller 360 performs simple oscillation driving with respect to the collimator lens actuator CL-ACT in a focus direction in accordance with the transmitted focus search control signal.

A size of the condensing spot (a condensing spot diameter) of the red laser beam 380 condensed by the objective lens OL through the collimator lens CL 2 subjected to the simple oscillation driving varies due to a change in degree of collimation of a light flux of the red laser beam that enters the objective lens OL in accordance with a reciprocating motion of the collimator lens CL 2 when the red laser beam 380 is condensed onto a layer including the guide groove 59 on the substrate 52 of the turntable 50.

Reflected light of the red laser beam 380 on the layer including the guide groove 59 is condensed by the red photodetector PDIC 2.

The red photodetector PDIC 2 generates a current based on an amount of reflected light (of the red laser beam), converts the current into a voltage, and supplies the voltage to the RF amplifier IC 350.

The RF amplifier IC 350 generates a focus error signal of the red laser beam from a received voltage signal based on a predetermined calculation and transmits this signal to the servo controller 360.

The servo controller 360 switches the driving with respect to the collimator lens actuator CL-ACT from the simple harmonic oscillation driving to driving based on the focus error signal when the input focus error signal nearly becomes zero, and it leads the focus of the red laser beam to the layer including the guide groove 59. That is, a position of the collimator lens CL 2 is controlled in such a manner that the red laser beam 380 forms a minimum spot on the layer including the guide groove 59.

In a state that the position of the collimator lens CL 2 is controlled so that the red laser beam 380 can form the minimum spot on the guide groove 59, the servo controller 360 leads the focus of the blue-violet laser beam 370 to the target recording layer 120 (in case of the single layer) or any one of the recording layers 120-1, ... , 120-N-1, and 120-N in the recording layers of the optical disk 100. In regard to the focus of the blue-violet laser beam 370, when the objective lens actuator OL-ACT is driven by the focus error signal generated by the RF amplifier IC 350 based on the voltage signal supplied from the blue-violet photodetector PDIC 1 (the current generated based on the amount of reflected light is converted into the voltage like the red laser beam), the focus of the objective lens OL can be led to the target recording layer 120 (120-1, ... , 120-N-1, or 120-N). Of course, as shown in FIG. 7A, in case of the optical disk constituted of the single recording layer, the focus is led to this recording layer. As shown in FIG. 7B, when the plurality of recording layers are provided, the focus is led to an arbitrary target layer in the recording layers 120-1, ... , 120-N.

It is to be noted that, in regard to the above-described operation, the servo system that performs the feedback control on each of the collimator lens CL 2 (the red laser beam) and the objective lens OL (the blue-violet laser beam) in the focus direction is constructed. However, when the thickness of the protective layer 1 is substantially fixed as described above and evenness of the thickness is substantially uniform, the feedback control in the focus direction of the red laser beam using the collimator lens CL 2 can be omitted.

After leading of each of the collimator lens CL 2 (the red laser beam) and the objective lens OL (the blue-violet laser beam) in the focus direction is completed, the servo controller 360 leads (performs tracking) the red laser beam 380 to a track defined by the guide groove 59 of the substrate 52 (the turn table 50). That is, the servo controller 360 drives the objective lens actuator OL-ACT by using a tracking error signal generated by the RF amplifier IC 350 based on the voltage signal supplied from the red photodetector PDIC 2, moves the position of the objective lens OL in the radial direction (of the optical disk 100) so that the center of the condensing spot of the red laser beam 380 can coincide with the center of the guide groove 59 (a track center), and leads the red laser beam 380 into an on-track state.

Subsequently, the signal processing unit 30 reads a data signal output as a data signal component by the RF amplifier IC 350 in the voltage signal supplied from the red photodetector PDIC 2, and reproduces a current address (the data signal concerning the address is acquired from the output from the PDIC 2 to acquire the address).

When the acquired address is different from a target address, the signal processing unit 30 transmits a track jump control signal to the servo controller 360 for track jump for tracks corresponding to a difference between the current address and the target address. The servo controller 360 that has accepted the track jump control signal transmits to the objective lens actuator OL-ACT a drive pulse for moving the objective lens OL to a desired track and condenses the red laser beam 380 on the desired track. It is to be noted that the objective lens OL also moves the blue-violet laser beam 370 condensed on the arbitrary recording layer 120 (120-1, ... , or 120-N) to substantially the same track.

When a fact that the laser beam condensed by the objective lens OL has reached (has been condensed on) the target address (track) by the focusing or tracking can be confirmed from reproduction of the output from the red photodetector PDIC 2, the signal processing unit 30 transmits a series of recording data to the laser driver LDD 1 (for the blue-violet laser LD 1).

The laser driver LDD 1 generates a drive pulse associated with the received series of recording data and transmits the generated drive pulse to the blue-violet laser LD 1 to perform pulse driving. Pulse light from the blue-violet laser LD 1 is applied to the recording layer 120 (120-1, ... , or 120-N) of the optical disk 100 through the objective lens OL to form a recording mark associated with the series of recording data. In this manner, recording target data can be recorded (stored) on the recording layer 120 (120-1, ... , or 120-N) of the optical disk 100.

An example of an operation of the data recording and reproducing apparatus at the time of data reproduction will now be described with reference to FIG. 5, FIG. 7A and 7B.

A reproduction command for user data (recorded data) is issued from the non-illustrated host device, for example, a personal computer (PC) or a recorder device and transmitted to the signal processing unit 30 via the interface 40.

The signal processing unit 30 starts a data reproduction process in accordance with the received reproduction command.

First, the signal processing unit 30 transmits drive signals to the laser driver (LDD 1) 330 for the (blue-violet laser diode) LD 1 and the laser driver (LLD 2) 340 for the (red laser diode) LD 2 and lights up the blue-violet laser LD 1 and the red laser LD 2 with reproduction power.

The servo controller 360 transmits a rotation drive signal to the spindle motor 60 and rotates the turntable 50 (and the optical disk 100 fixed to the spacer portion 55 of the turntable 50 by the clamper 70) at a predetermined number of revolutions.

The signal processing unit 30 transmits a focus search control signal to the servo controller 360.

The servo controller 360 performs simple oscillation driving with respect to the collimator lens actuator CL-ACT in the focus direction in accordance with the transmitted focus search control signal.

A size of the condensing spot (a condensing spot diameter) of the red laser beam 380 condensed by the objective lens OL through the collimator lens CL 2 subjected to the simple oscillation driving varies due to a change in degree of collimation of a light flux of the red laser beam that enters the objective lens OL in accordance with a reciprocating motion of the collimator lens CL 2 when the red laser beam 380 is condensed onto the layer including the guide groove 59 on the substrate 52 of the turntable 50.

Reflected light of the red laser beam 380 on the layer including the guide groove 59 is condensed by the red photodetector PDIC 2.

The red photodetector PDIC 2 generates a current based on an amount of reflected light (of the red laser beam), converts the current into a voltage, and supplies the voltage to the RF amplifier IC 350.

The RF amplifier IC 350 generates a focus error signal of the red laser beam from a received voltage signal based on a predetermined calculation and transmits this signal to the servo controller 360.

The servo controller 360 switches the driving with respect to the collimator lens actuator CL-ACT from the simple harmonic oscillation driving to driving based on the focus error signal when the input focus error signal nearly becomes zero, and it leads the focus of the red laser beam to the layer including the guide groove 59. That is, a position of the collimator lens CL 2 is controlled in such a manner that the red laser beam 380 forms a minimum spot on the guide groove 59.

The servo controller 360 continuously leads the focus of the blue-violet laser beam 370 to the target recording layer 120 (in case of the single layer) or any one of the recording layers 120-1, ... , 120-N-1, and 120-N (in case of the multiple layers) on the optical disk 100.

At this time, in regard to the focus of the blue-violet laser beam 370, when the objective lens actuator OL-ACT is driven by the focus error signal generated by the RF amplifier IC 350 based on the voltage signal supplied from the blue-violet photodetector PDIC 1 (the current generated based on the amount of reflected light is converted into the voltage like the red laser beam), the focus of the objective lens OL can be led to the target recording layer 120 (120-1, ... , 120-N-1, or 120-N). That is, as shown in FIG. 7A, in case of the optical disk constituted of the single recording layer 120, the focus is led to this recording layer. As shown in FIG. 7B, when the plurality of recording layers are provided, the focus is led to an arbitrary target layer in the recording layers 120-1, ... , 120-N.

After leading of the focus of all the beams is completed, the servo controller 360 brings in (performs tracking) the red laser beam 380 to a track defined by the guide groove 59. That is, the servo controller 360 drives the objective lens actuator OL-ACT by using a voltage signal transmitted from the red photodetector PDIC 2 in accordance with a tracking error signal generated by the RF amplifier IC 350, and leads the red laser beam 380 to the track of the guide groove 59.

Subsequently, the signal processing unit 30 reads a data signal generated by the RF amplifier IC based on the voltage signal supplied from the red photodetector PDIC 2, and reproduces a current address.

When a target address is different, the signal processing unit 30 transmits to the servo controller 360 a track jump control signal for tracks corresponding to a difference between the current address and the target address. The servo controller 360 transmits to the objective lens actuator OL-ACT a drive pulse based on the track jump control signal and moves the red laser beam 380 on a desired track.

Further, the blue-violet laser beam 370 applied through the same objective lens OL is likewise subjected to track movement.

The blue-violet photodetector PDIC 1 converts a current based on an amount of reflected light obtained when the blue-violet laser beam 370 is reflected on the recording layer 120 (120-1, ... , or 120-N) of the optical disk 100 into a voltage and supplies the converted voltage to the RF amplifier IC 350.

The RF amplifier IC 350 generates a tracking error signal of the blue-violet laser beam 370 from a received voltage signal based on a predetermined calculation and transmits the generated signal to the servo controller 360.

The tracking error signal is, for example, a differential phase detection (DPD) signal or a push pull signal generated from a recorded mark string on the recording layer 120 (120-1, ... , or 120-N).

After determining that the condensing spot of the blue-violet laser beam 370 has reached the target address or a track near the target address (a track traced by the condensing spot has reached the target address or the vicinity thereof), the signal processing unit 30 transmits a control signal for separation of the guide groove 59 from the servo to the servo controller 360.

The servo controller 360 switches driving with respect to the objective lens actuator from driving based on the tracking error signal of the red laser beam 380 to driving based on the tracking error signal of the blue-violet laser beam 370, and it leads the blue-violet laser beam 370 to a recorded track on the recording layer 120 (120-1, ... , or 120-N).

Subsequently, the signal processing unit 30 reads a data signal generated by the RF amplifier IC based on the voltage signal transmitted from the blue-violet photodetector IC and reproduces a current address of the recording layer 120 (120-1, ... , or 120-N) to which the blue-violet laser beam 370 has been led.

When a target address is different, the signal processing unit 30 transmits to the servo controller 360 a track jump control signal for track jump of the objective lens OL for tracks corresponding to a difference between the current address and the target address in regard to the blue-violet laser beam 370.

The servo controller 360 transmits a drive pulse to the objective lens actuator OL-ACT based on the track jump control signal and moves the blue-violet laser beam 370 to a desired track.

The signal processing unit 30 confirms that the target address has been reached and starts data reproduction from the recording layer 120 (120-1, ... , or 120-N).

In this manner, the data recording and reproducing apparatus can reproduce data from the arbitrary recording layer 120 (120-1, ... , or 120-N).

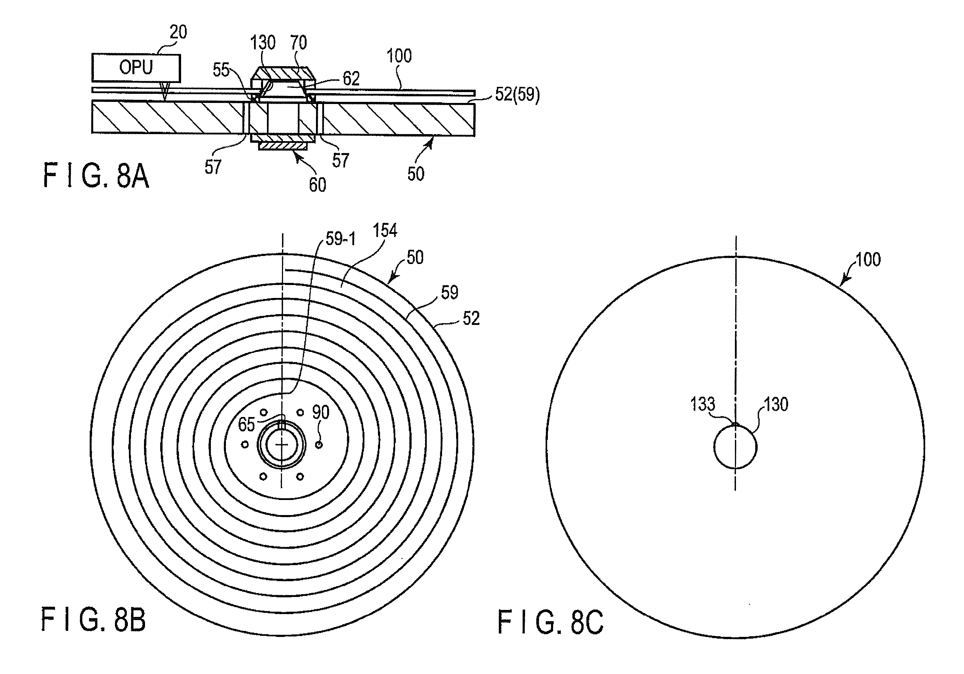

FIGS. 8A and 8B are an exemplary diagrams each an example of a clamp portion of the turntable of a data recording and reproducing apparatus, and FIG. 8C show detailed shapes of the optical disk (a recording medium) according to the embodiment.

Although FIG. 2A, 2B, 3A, 3B, 4A and 4B each shows the detailed cross section of the optical disk 100, the optical disk 100 has a substantially circular opening portion (a center hole) 130 at the central portion as shown in FIG. 8C. A diameter of the opening portion 130 is, for example, 15 mm. The opening portion 130 has, for example, a semicircular notch (a positioning structure) 133 that defines one line in a normal direction of the opening portion 130 at one arbitrary position on the circumference. A diameter of the semicircle is, for example, 2 mm.

A clamp portion 62 (which is integrally formed with the rotary shaft 51 and the spacer portion 55 protruding from the substrate 52 of the turntable 50) of the spindle motor 60 has, for example, a taper cone (circular cone) shape as shown in FIGS. 8A and 8B, and it has a raised (protruding) portion 65 with a semicircular cross section at a part thereof. A diameter of the cross-sectional semicircle of the raised (protruding) portion 65 is substantially the same as a size of the semicircular notch of the optical disk 100.

The clamp portion 62 is formed to be elastically movable up and down, and the optical disk 100 is pressed against the clamp portion 62 by the clamper 70 and fixed at a height where the diameter of the opening portion 130 of the optical disk 100 becomes substantially equal to a diameter of the cross-sectional circle (a diameter when the taper cone is cut at the same height) of the circular cone part of the clamp portion 62. Therefore, it is possible to substantially avoid a state that an amount of eccentricity of the optical disk 100 differs every time clamping is carried out when the optical disk 100 is fixed by the clamper 70 and the clamp portion 62. It is to be noted that, since the spacer portion 55 is provided to the substrate 52 of the turntable 50 that the rotary shaft 61 of the spindle motor 60 or the central shaft 51 of the turntable 50 protrudes at the center, the optical disk 100 is fixed to the spacer portion 55 by the clamper 70 while maintaining a predetermined gap between itself and the substrate 52 (the turntable 50).

Furthermore, when the raised portion 65 having the semicircular cross section of the clamp portion 62 is fitted in the semicircular notch 133 of the opening portion 130 of the optical disk 100, it is possible to avoid a displacement of the optical disk 100 in the rotating direction when fixed to the turntable 50 (the spacer portion 55) and idling at the time of rotation or stoppage of the optical disk 100 (the turntable 50).

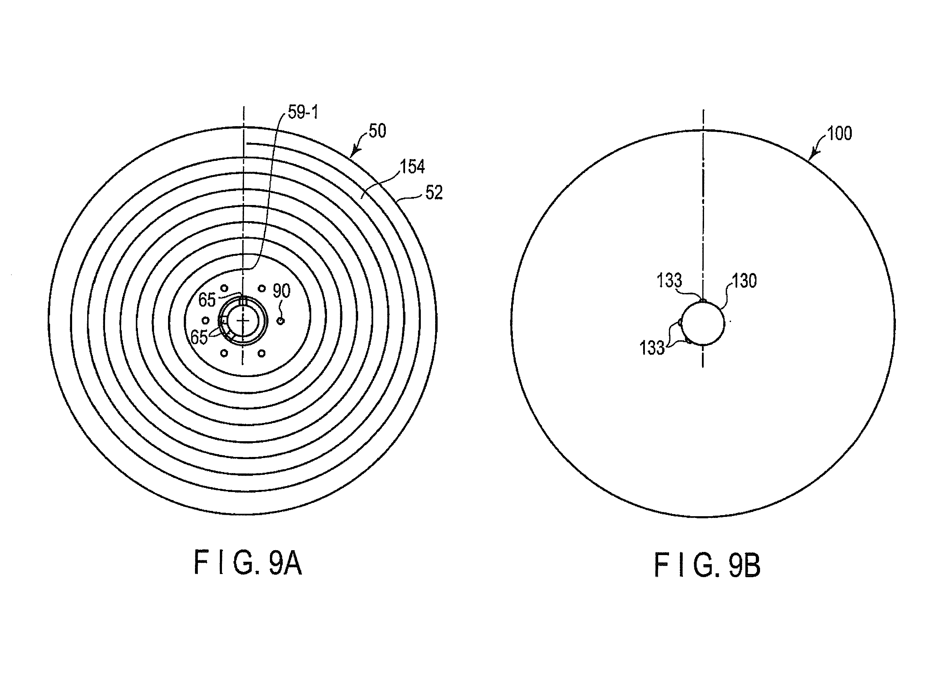

FIG. 9A shows an example of asymmetric arrangement that the positioning structures (the notches) 133 of clamp portion of the turntable of the optical disk 100 and the raised portions 65 of the clamp portion 62 of the turntable 50 are provided at, for example, three positions and the optical disk 100 cannot be attached to the spacer portion 55 when the optical disk 100 is turned over, and FIG. 9B is an exemplary diagram showing an example of the optical disk 100.

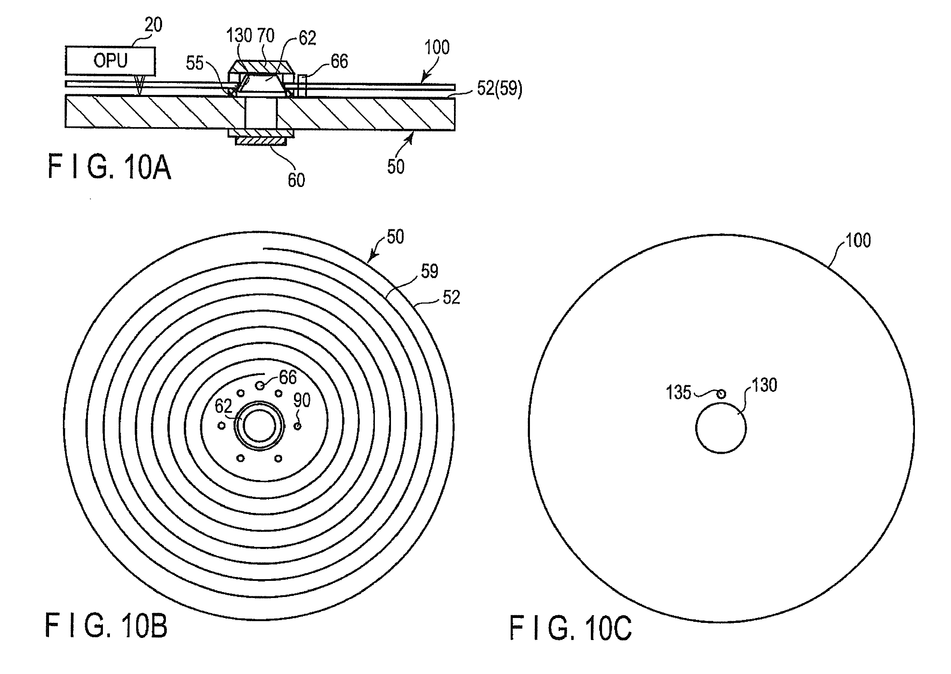

FIGS. 10A, 10B and FIG. 10C each shows another embodiment of the positioning structure of the turntable and the optical disk.

Like the example shown in FIG. 8C, the optical disk 100 has a circular opening portion 130 at the central portion thereof. A diameter of the opening portion is, for example, 15 mm. A later-described positioning pinhole 135 is provided in the vicinity of the opening portion 130. A diameter of the positioning pinhole 135 is, for example, approximately 2 mm (FIG. 10C).

The clamp portion 62 (which is integrally formed with the rotary shaft 51 and the spacer portion 55 protruding from the substrate 52 of the turntable 50) of the spindle motor 60 has a taper cone shape as shown in FIGS. 10A and 10B. Furthermore, a positioning pin 66 is disposed to the clamp portion 62 (the turntable 50). A diameter of the positioning pin is, for example, 2 mm, and a height of this pin is larger than a sum of thicknesses of the spacer portion 55 and the optical disk 100 and is, for example, 4 mm.

The clamp portion 62 elastically moves up and down, and the optical disk 100 is pressed against the clamp portion 62 by the clamper 70 and fixed at a height that the diameter of the opening portion 130 of the optical disk 100 becomes substantially equal to a diameter of a cross-sectional circle (a diameter when the taper cone is cut at the same height) of the cross section of the circular cone part of the clamp portion 62. Therefore, it is possible to substantially avoid a state that an amount of eccentricity of the optical disk 100 differs every time clamping is carried out when the optical disk 100 is fixed by the clamper 70 and the clamp portion 62. It is to be noted that, since the spacer portion 55 is provided to the substrate 52 of the turntable 50 that the rotary shaft 61 of the spindle motor 60 or the central shaft 51 of the turntable 50 protrudes at the center, the optical disk 100 is fixed to the spacer portion 55 by the clamper 70 while maintaining a predetermined gap between itself and the substrate 52 (the turntable 50).

Additionally, when the positioning pin 66 of the clamper portion 62 is inserted into the positioning pinhole 135 of the optical disk 100, a position in the rotating direction at the time of fixing the optical disk 100 to the turntable 50 is fixed to a given relationship. It is to be noted that a diameter of the positioning pinhole 135 is set to be substantially equal to and slightly larger than the diameter of the positioning pin 66 by, for example, several or tens of microns. As a result, it is possible to avoid a displacement of the optical disk 100 in the rotating direction when fixed to the turntable 50 and idling at the time of rotation or stoppage.

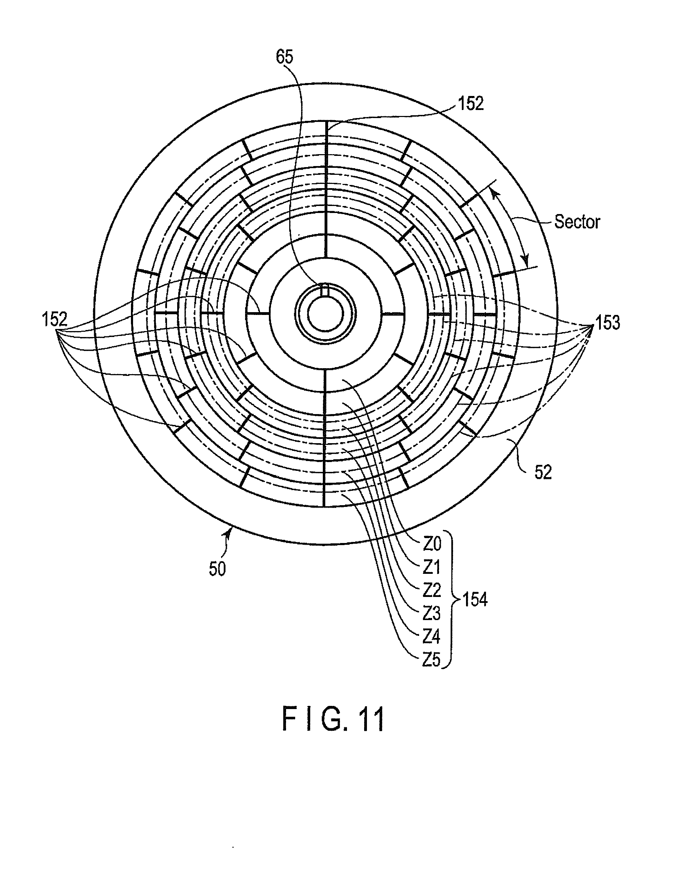

FIG. 11 shows an example of another embodiment (replacement of the guide groove) of a servo structure provided to the substrate 52 of the turntable 50.

In the embodiment depicted in FIG. 11, the substrate 52 of the turntable 50 has at least one servo mark 152 which can be replaced with the guide groove 59 described in conjunction with FIG. 8B or FIG. 9B. The servo mark 152 is formed of, a pre-pit string discretely arranged in the circumferential direction on tracks 153 concentrically provided with a track pitch of, for example, 0.64 µm. A shape (arrangement) of the track 153 may be a spiral form like the guide groove 59.

It is preferable to arrange the servo marks 152 in units of sector in a track extending direction and set one sector to, for example, approximately 2 K (kilo=10³) bytes. It is desirable to divide the track 153 into zones in the radial direction and fix the number of servo marks 152 per track. In the example shown in FIG. 11, the number of zones is 6 (Z₀ to Z₅) for simplicity, but approximately 10 to 30 (Z0, ... , Zn-1, and Zn) is preferable as the number of zones, for example.

At the servo mark 152, a servo signal is obtained by the pre-pit (the pre-pit string), and this signal functions as a lead-in signal to the center of the track 153. In a region where the servo mark 152 is not present on the track 153, the servo signal at the previously traced servo mark 152 is held to trace the track 153. User data is recorded in the region without the servo mark 152.

Furthermore, like the example shown in FIG. 9A and FIG. 9B, when the positioning pinholes 135 of the optical disk 100 and the pins 66 of the clamp portion 62 of the turntable 50 are provided at, for example, three positions, and asymmetric arrangement is adopted so that the optical disk 100 cannot be attached to the spacer portion 55 (see FIGS. 1A and 1B) when the optical disk 100 is turned over, whereby the optical disk 100 can be prevented from being set to the turntable 50 in the overturned state.

It is to be noted that, as shown in FIG. 8A, FIG. 8B and FIG. 8C or FIG. 9A and FIG. 9B, displacements of the optical disk 100 and the turntable 50 in the rotating direction can be avoided by providing the raised portion 65 having the semicircular cross section or the positioning pin 66 to the clamp portion 62 of the turntable 50, but the displacement of the guide groove 59 and a start position of the track 153 may occur when the optical disk 100 is temporarily removed during recording and set to another device unless a positional relationship between the guide groove 59 on the substrate 52 of the turntable 50 and the raised portion 65 or the positioning pin 66 is determined in accordance with each device (the data recording and reproducing apparatus 10).

Therefore, the raised portion 65 or the positioning pin 66 must be fixed with respect to the start position of the guide groove 59 irrespective of removal or reset of the optical disk 100 so that the displacement does not between the guide groove 59 on the substrate 52 (the turntable 50) and the start position of the track 153.

Based on such a background, as shown in FIG. 8A, FIG. 8B and FIG. 8C or FIG. 9A and FIG. 9B, the start position of the guide groove 59 on the substrate 52 (the turntable 50) and the raised portion 65 or the positioning pin 66 are placed on the same rotation angle (on the same straight line in the radial direction) as a start point 59-1 of the guide groove 59. As a result, the positional relationship of the optical disk 100 with respect to the guide groove 59 in the rotating direction becomes constantly fixed by alignment of the raised portion 65 and the semicircle 133 or the positioning pinhole 135 and the positioning pin 66.

It is to be noted that FIG. 8B and FIG. 8C or FIG. 9A and FIG. 9B, each shows the positional relationship between the guide groove 59 and the notch 133 and FIG. 9A and FIG. 9B each shows the positional relationship between the guide groove 59 and the positioning pinhole 135, but the same effect can be expected by setting the positional relationship between the raised portion 65 of the clamp portion 62 and the guide groove 59 in completely the same manner. Furthermore, the same effect can be likewise expected by a non-illustrated combination of the guide groove 59 and the positioning pinhole 135.

On the other hand, when the notches 133 (the positioning pinholes 135) shown in FIG. 9A and FIG. 9B are provided, the start position of the guide groove 59 on the substrate 52 (the turntable 50) and one of the raised portions 65 (or one positioning pin 66) can be placed on the same rotation angle (on the same straight line in the radial direction) as the start point 59-1 of the guide groove 59.

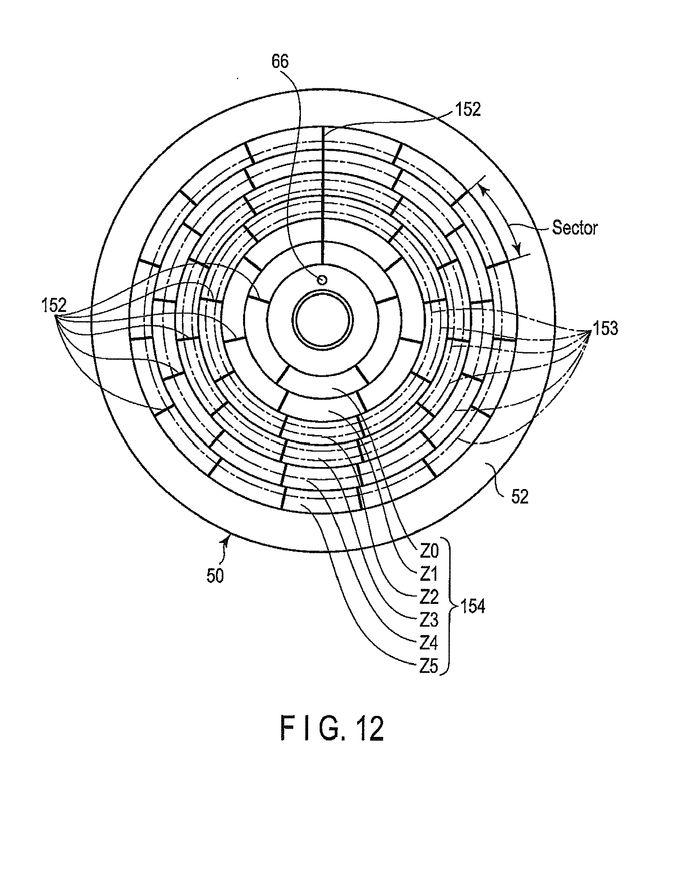

FIG. 12 shows another example of characteristics of the arrangement of the servo marks provided on the substrate 52 of the turntable 50.

In FIG. 12, servo marks 252 which can substitute for the guide groove 59 shown in FIG. 8B or FIG. 9A or the servo marks depicted in FIG. 11 are formed of a pre-pit string arranged in such a manner that the number of sectors discretely partitioned in the circumferential direction by the servo marks 252 becomes an odd number (the number of the servo marks is also an odd number) in each zone 154 on the tracks 153 concentrically provided with a track pitch of, for example, 0.64 µm. It is to be noted that the shape (the arrangement) of the track 153 may be a spiral shape like the guide groove 59.

When the number of the servo marks 252 (and the sectors) in each zone is an odd number, factors of emergence of the arrangements of the servo marks having similar positional relationship per revolution of the optical disk 100 can be reduced. For example, when a read error indicated by the pre-pit of the servo mark 252 occurs, servo mark data at, for example, a rotationally symmetric position can be substantially prevented from being erroneously read at the time of. subsequently reading the target servo mark 252. That is, for example, when a read error of the pre-pit of the servo mark 252 occurs and a servo signal cannot be acquired, a time required until the servo signal is acquired can be reduced.

Moreover, as a method of essentially eliminating a displacement of the guide groove or the servo mark on the turntable 50 (the substrate 52) and the track of the optical disk 100, there is transfer, i.e., formatting of the guide groove or the servo mark onto the recording layer 120 (120-1, ... , or 120-N) of the optical disk 100. For example, this method can be realized by tracking the guide groove or the servo mark on the turntable 50 (the substrate 52) using the red laser beam (from the LD 2) and writing to the recording layer 120 (120-1, ... , or 120-N) using the blue-violet laser beam (from the LD 1).

That is, before recording data on the recording layer 120 (120-1, ... , or 120-N) of the optical disk 100, the formatting is carried out over the entire surface of the recording layer, and the control is changed to prevent the data in the guide groove or the servo mark on the substrate 52 (the turntable 50) from being read (used) at the time of subsequent data recording, thereby easily realizing the method.

On the optical disk 100 after the formatting, at the time of recording data on the recording layer 120 (120-1, ... , or 120-N) of the optical disk 100 or reproduction of the data from the recording layer, tracking servo can be performed with the blue-violet laser beam using the data in the guide groove or the servo mark transferred to the recording layer. That is, on the optical disk 100 after the formatting, each track on the recording layer of the optical disk 100 is formed based on servo data (the guide groove or the servo mark) formed on the recording layer of the optical disk, the positional relationship between the turntable 50 (the substrate 52) and the recording start position of the optical disk 100 no longer affects formation of each track.

According to the foregoing embodiment, at the time of manufacture of the optical disk, especially a flexible disk having a thickness of approximately 100 to a few hundred micrometers, since the servo data (the guide groove or the servo mark) does not have to be formed on the recording layer, productivity of the optical disk can be improved (a production yield at the time of production can be improved). It is to be noted that, when evenness (a variation) of the shape of the guide groove that differs in accordance with each (single) disk is essentially eliminated, quality of the disks can be enhanced. Moreover, homogeneity of the disks can be also greatly improved.

Additionally, according to the foregoing embodiment, a manufacturing cost of the optical disk (the flexible disk) can be considerably reduced.

It is to be noted that, since idling at the time of rotation and stoppage of the disk is suppressed, the displacements of the guide groove and the (recorded) track in the rotating direction can be eliminated even when the optical disk according to the foregoing embodiment having the configuration that the guide groove is separated from the recording layer is removed from the data recording and reproducing apparatus during recording, for example.

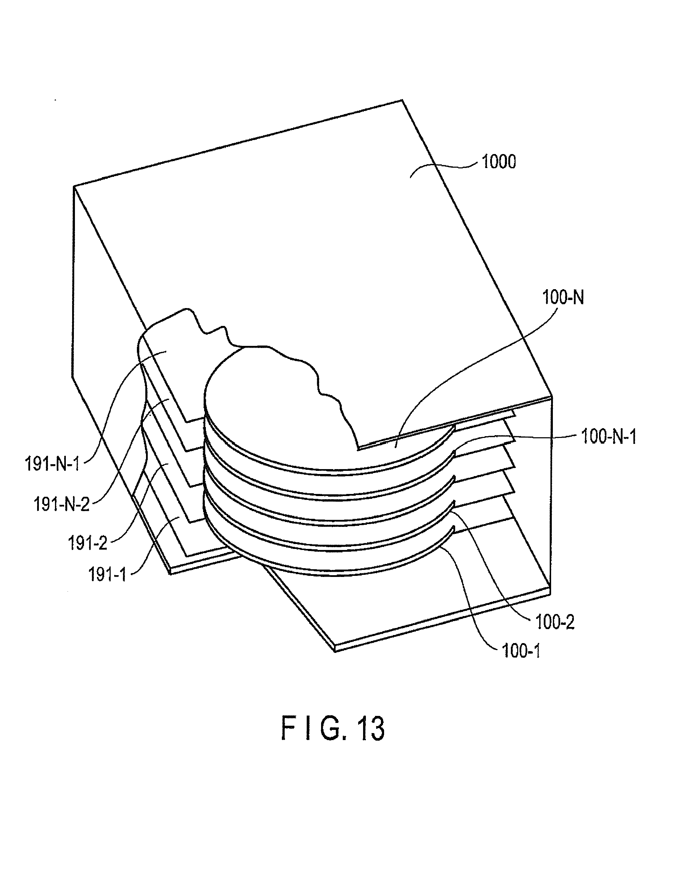

FIG. 13 shows an application example of handling of an optical disk to which the embodiment is applied, especially a flexible disk having a thickness of approximately 100 to a few hundred micrometers.

For example, when the optical disk 100 has three to five layers and a recording capacity per disk is 100 G (giga=10⁹) bytes, accommodating an arbitrary number of optical disks 100-1, 100-2, ... , 100-N-1, and 100-N (N is a positive integer) in a magazine (an exterior case) 1000 enables a total recording capacity to exceed 1 T (tera=10¹²) bytes. Recording surfaces of the respective optical disks are prevented from coming into contact with each other by spacers 191-1, ... , 191-N-2, and 191-N-1.

As shown in FIG. 13, when the optical disks are accommodated in the magazine 1000 and data is recorded on an arbitrary optical disk, it is not necessary to substantially consider, for example, adhesion of fingerprints and others which may occur when a user attaches or detaches the single (one) optical disk 10 or turnover and attachment of the optical disk.

It is to be noted that various techniques which are already in practical use can be used as methods of interchanging disks or access of the OPU.

## Claims

1. An electronic device **characterized by** comprising:
a turntable (50) configured to rotate a recording medium including a recording layer along a plane on which a surface of the recording layer extends;
a servo data providing mechanism (10) configured to provide on a surface of the turntable facing the recording layer of the recording medium and provides servo data used for recording of data on the recoding medium or reproduction of data from the recording medium; and
a recording and reproduction module (20) configured to irradiate the recording layer of the recording medium with light having a first wavelength and light having a second wavelength different from the light having the first wavelength from the opposite side of the recording medium with respect to the turntable.

2. The electronic device of claim 1, **characterized in that** one of the light having the first wavelength and the line having the second wavelength is focused onto the servo data providing mechanism.

3. The electronic device of claim 2, **characterized in that** the other of the light having the first wavelength and the light having the second wavelength is focused onto the recording layer of the recording medium.

4. The electronic device any one of claims 1 or 2, **characterized in that** the recording and reproduction unit further comprises a first lens which focuses one of the light having the first wavelength and the light having the second wavelength onto the servo data providing mechanism of the turntable.

5. The electronic device of claim 4, **characterized in that** the recording and reproduction unit further comprises a second lens which focuses the other of the light having the first wavelength and the light having the second wavelength that have passed through the first lens onto the recording layer of the recording medium.

6. The electronic device any one of claims 1 or 2, **characterized in that** the turntable further comprises a positioning member which sets positions of the recording medium and the turntable.

7. The electronic device any one of claims 1 or 2, **characterized in that** the servo data providing mechanism is formed into a spiral shape extending from the vicinity of the center of the turntable to the outer periphery.

8. The electronic device any one of claims 1 or 2, **characterized in that** the servo data providing mechanism is formed into a concentric form extending from the vicinity of the center of the turntable to the outer periphery.

9. The electronic device any one of claims 1 or 2, **characterized in that** the servo data providing mechanism is arranged radially from the vicinity of the center of the turntable aligned along radial lines running through the center of the turntable.

10. A recording medium **characterized by** comprising:
a cover layer (110) configured to transmit lights having two different wavelengths therethrough; and
a recording layer (120 (120-1, ... , 120-N)) configured to provide on one surface of the cover layer and on which data is recorded using the light having one of the two wavelengths,
**characterized in that** the cover layer and the recording layer transmit the light having the other of the two wavelengths therethrough for focusing and track control when recording the data on the recording layer.

11. A recording method of recording data on a recording medium, the recording medium **characterized by** comprising:
a cover layer which transmits lights having two different wavelengths therethrough; and
a recording layer which is provided on one surface of the cover layer and on which data is recorded using the light having one of the two wavelengths,
**characterized in that** servo data held by a rotating device which rotates the recording medium is read using the light having the other of the two wavelengths which has been transmitted through the cover layer and the recording layer, and data is recorded on the recording layer of the recording medium using the one light.
